# EUROPÄISCHE PATENTSCHRIFT

(11) **EP 1 736 299 B1**
(45) Veröffentlichungstag und Bekanntmachung des Hinweises auf die Patenterteilung: **31.12.2008**
(21) Anmeldenummer: 06012501.0
(22) Anmeldetag: 19.06.2006
(51) Int. Cl.: B29C 49/00, B29C 47/90, B29D 23/18

(54) **Vorrichtung zur Herstellung von doppelwandigen verbundrohren**
Apparatus for the manufacture of double-walled pipes
Dispositif pour fabriquer les tubes à double paroi

(30) Priorität: 25.06.2005 DE 102005029580
(43) Veröffentlichungstag der Anmeldung: 27.12.2006
(73) Patentinhaber: UNICOR GmbH, 97437 Hassfurt (DE)
(72) Erfinder: Neubauer, Gerhard, 97486 Königsberg (DE)
(74) Vertreter: Köhler, Walter

(56) Entgegenhaltungen:
- WO-A-90/14208
- DE-A1- 10 225 582
- NL-A- 8 700 203
- US-B1- 6 539 829
- US-B1- 6 671 911

## Beschreibung

Die Erfindung betrifft eine Vorrichtung zur Herstellung von doppelwandigen Verbundrohren, mit einem Rohrrippenlängenabschnitt mit einer Wellenberge und Wellentäler aufweisenden Außenwand und einer glatten Innenwand, die mit den Wellentälern der Außenwand integral verbunden ist, und mit einem Rohrmuffenabschnitt, entlang welchem die Außenwand und die Innenwand aneinander flächig anliegend integral verbunden sind, wobei die Vorrichtung zwei Reihen von Formbackenhälften aufweist, die entlang einer gemeinsamen Formstrecke einen Formtunnel zur Herstellung des Verbundrohres bilden, wobei mindestens ein Paar der sich in der Formstrecke gegenüberliegenden Formpackenhälften eine den Rohrmuffenabschnitt ergebende Innenkontur aufweisen, die restlichen Formbackenhälften abwechselnd mit den Wellenbergen entsprechenden Querrinnen und den Wellentälern entsprechenden Querrippen ausgebildet sind, und in den Formtunnel für die glatte Innenwand ein Kalibrierdorn hineinsteht, an dessen Außenmantelfläche gesteuert ein Unterdruck anlegbar ist.

Eine derartige Vorrichtung, gemäß dem Oberbegriff des Anspruchs 1 ist aus der DE 102 25 582 A1 oder aus der DE 690 12 129 T2 bekannt. Bei der aus der DE 102 25 582 A1 bekannten Vorrichtung ist der Kalibrierdorn mit mindestens zwei mit Unterdruck beaufschlagbaren Bereichen ausgebildet, wobei jeder dieser Unterdruckbereiche zwei axial voneinander beabstandete Zuführungsnuten aufweisen kann, die durch schraubenförmig umlaufende Verteilungsnuten verbunden sind. Jede dieser Unterdruckbereiche weist also eine bestimmte axiale Breitenabmessung auf, die durch die axial voneinander beabstandeten Zuführungsnuten bestimmt ist. Durch die Ausbildung des Kalibrierdorns mit den Unterdruckbereichen bzw. Vakuumzonen, welche durch größere Bereiche ohne Vakuum axial voneinander beabstandet und auch nur komplett zu- und abschaltbar sind, kann die Vakuumsteuerung im Übergangsbereich zwischen Rohr- und Muffenbereich nicht genau genug erfolgen. Als Folge der ungenauen Vakuumsteuerung im Übergangsbereich bilden sich bevorzugt Fehlstellen auf der Innenwand bzw. -haut.

Eine Vorrichtung der eingangs genannten Art mit einem Kalibrierdorn, der mit Unterdruck beaufschlagbare Bereiche aufweist, wobei jeder Unterdruck-Bereich durch zwei axial voneinander beabstandete Zuführungsnuten und diesen verbindenden Verteilungsnuten gebildet ist, ist auch aus der US 4 808 098 bekannt.

Der Erfindung liegt die Aufgabe zugrunde, eine Vorrichtung der eingangs genannten Art zu schaffen, bei der die Übergangsbereiche zwischen dem Rohrrippenlängenabschnitt und dem Rohrmuffenabschnitt sehr exakt mit oder ohne Vakuum beaufschlagt werden können.

Diese Aufgabe wird durch eine Vorrichtung gemäß Anspruch 1 gelöst.

Bei der erfindungsgemäßen Vorrichtung sind die Vakuumrillen an der Außenmantelfläche des Kalibrierdorns als axial schmale Rillen ausgebildet, so dass die mit den Vakuumrillen gesteuert über die Vakuum-Steuerventileinrichtung zusammenwirkende Vakuumquelle relativ klein und energiesparend dimensioniert sein kann.

Als zweckmäßig hat es sich bei der erfindungsgemäßen Vorrichtung erwiesen, wenn die Vakuumrillen an der Außenmantelfläche des Kalibrierdorns axial voneinander gleichmäßig beabstandet sind. Dabei können die Vakuumrillen voneinander einen axialen Abstand besitzen, der dem axialen Abstand zwischen benachbarten Querrippen der Formbackenhälften entspricht.

Vorteilhaft ist es, wenn die Vakuumlöcher der Vakuum-Steuerventileinrichtung entlang eines Umfangsabschnittes eines Kreises voneinander gleichmäßig beabstandet angeordnet sind, und wenn das Steuerorgan der Vakuum-Steuerventileinrichtung als Steuerscheibe mit einem Verschlussteil ausgebildet ist, das in Umfangsrichtung des Kreises, entlang welchem die Vakuumlöcher voneinander gleichmäßig beabstandet angeordnet sind, eine an den Rohrmuffenabschnitt angepasste Längenabmessung besitzt und den Kreisumfangsabschnitt der Vakuumlöcher zum vollen Kreis ergänzt. Eine derartige Ausbildung ist einfach und präzise realisierbar.

Bei einer Vorrichtung der zuletzt genannten Art kann die Steuerscheibe der Vakuum-Steuerventileinrichtung mittels einer die Antriebseinrichtung bildenden Kolben-Zylindereinheit über eine Rastscheibe schrittweise, jeweils dem axialen Abstand zwischen benachbarten Vakuumrillen des Kalibrierdornes entsprechend, angetrieben wird. Die Kolben-Zylindereinheit kann von einem Pneumatikzylinder gebildet sein. Der Pneumatikzylinder ist zweckmäßigerweise mit einer Steuerimpulseinrichtung verbunden. Diese Steuerimpulseinrichtung kann von einer speicherprogrammierbaren Steuerung gebildet sein.

Weitere Einzelheiten ergeben sich aus der nachfolgenden Beschreibung eines in der Zeichnung abschnittweise schematisch verdeutlichten Ausführungsbeispieles der erfindungsgemäßen Vorrichtung bzw. aufeinander folgender Verfahrensschritte bei der Herstellung von doppelwandigen Verbundrohren mittels der erfindungsgemäßen Vorrichtung.

Es zeigen:
- Figur 1: eine erste Betriebsstellung der Vorrichtung,
- Figur 2: eine an die erste Betriebsstellung gemäß Figur 1 anschließende zweite Betriebsstellung der erfindungsgemäßen Vorrichtung,
- Figur 3: eine an die zweite Betriebsstellung gemäß Figur 2 anschließende dritte Betriebsstellung der erfindungsgemäßen Vorrichtung,
- Figur 4: eine an die dritte Betriebsstellung gemäß Figur 3 anschließende vierte Betriebsstellung der erfindungsgemäßen Vorrichtung,
- Figur 5: eine an die vierte Betriebsstellung gemäß Figur 4 anschließende fünfte Betriebsstellung der erfindungsgemäßen Vorrichtung,
- Figur 6: eine an die fünfte Betriebsstellung gemäß Figur 5 anschließende sechste Betriebsstellung der erfindungsgemäßen Vorrichtung,
- Figur 7: eine an die Betriebsstellung gemäß Figur 6 anschließende Betriebsstellung der erfindungsgemäßen Vorrichtung, wobei die letzten vier Vakuumrillen des Kalibrierdorns von der Vakuumquelle getrennt sind,
- Figur 8: eine an die Betriebsstellung gemäß Figur 7 anschließende Betriebsstellung der erfindungsgemäßen Vorrichtung, wobei die letzten drei im Bereich des Rohrmuffenabschnittes befindlichen Vakuumrillen von der Vakuumquelle getrennt sind,
- Figur 9: eine an die Betriebsstellung gemäß Figur 8 anschließende Betriebsstellung der erfindungsgemäßen Vorrichtung,
- Figur 10: eine an die Betriebsstellung gemäß Figur 9 anschließende Betriebsstellung der erfindungsgemäßen Vorrichtung, wobei sich nur noch die letzte Vakuumrille im Bereich des Rohrmuffenabschnittes befindet, und
- Figur 11: die an die Betriebsstellung gemäß Figur 10 anschließende Betriebsstellung der erfindungsgemäßen Vorrichtung, die wieder der Betriebsstellung gemäß Figur 1 entspricht, weil die Vakuumrillen des Kalibrierdorns wiederum einem Rohrrippenlängenabschnitt des doppelwandigen Verbundrohres zugeordnet sind.

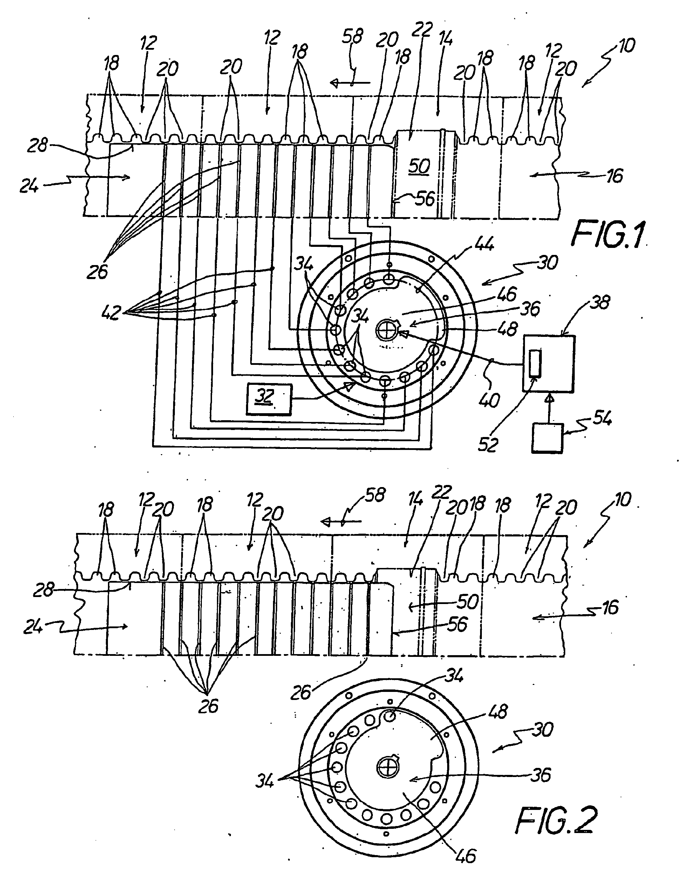

Figur 1 zeigt in einer schematischen Darstellung wesentliche Einzelheiten der erfindungsgemäßen Vorrichtung 10 zur Herstellung von doppelwandigen Verbundrohren, nämlich Formbackenhälften 12 und 14. In der Zeichnung sind drei Formbackenhälften 12 einer Formbacken-Reihe dargestellt. Dieser Reihe Formbackenhälften 12, 14 liegen in einer zweiten (nicht gezeichneten) Reihe von Formbackenhälften entsprechende Formbackenhälften 12, 14 gegenüber, um einen Formtunnel 16 zur Herstellung eines doppelwandigen Verbundrohres zu bilden.

Die sich entlang des Formtunnels 16 gegenüberliegenden Formbackenhälften 12 sind abwechselnd mit Querrinnen 18 und mit Querrippen 20 ausgebildet.

Die Formbackenhälften 14 - von welchen in Figur 1 nur eine Formbackenhälfte 14 dargestellt ist - sind mit einer einem Rohrmuffenabschnitt des herzustellenden doppelwandigen Verbundrohres entsprechenden Innenkontur 22 ausgebildet. An diese Innenkontur 22 schließen sich beidseitig Querrinnen 18 und Querrippen 20 an.

In den nur halbseitig dargestellten Formtunnel 16 steht ein Kalibrierdorn 24 hinein. Der Kalibrierdorn 24 ist mit Vakuumrillen 26 ausgebildet, die um die Außenmantelfläche 28 des Kalibrierdorns 24 umlaufen. Die Vakuumrillen 26 besitzen jeweils eine kleine axiale Breitenabmessung und eine geringe Tiefe. Die Vakuumrillen 26 sind axial voneinander gleichmäßig beabstandet und über eine Vakuum-Steuerventileinrichtung 30 mit einer Vakuumquelle 32 gezielt schrittweise verbindbar. In Figur 1 sind alle Vakuumrillen 26 des Kalibrierdorns 24 mit der Vakuumquelle 32 strömungstechnisch verbunden.

Die Vakuum-Steuerventileinrichtung 30 weist eine der Anzahl Vakuumrillen 26 entsprechende Anzahl Vakuumlöcher 34 und ein Steuerorgan 36 auf, das mit einem Antrieb 38 wirkverbunden ist. Diese Wirkverbindung ist durch den Pfeil 40 angedeutet.

Jeder Vakuumrille 26 des Kalibrierdornes 24 ist ein Vakuumloch 34 der Vakuum-Steuerventileinrichtung 30 zugeordnet, das ist durch die dünnen Linien 42 angedeutet.

Die Vakuumlöcher 34 der Vakuum-Steuerventileinrichtung 30 sind entlang eines Kreises 44, d.h. entlang eines Kreisumfangsabschnittes des Kreises 44, voneinander gleichmäßig beabstandet angeordnet.

Das Steuerorgan 36 der Vakuum-Steuerventileinrichtung 30 ist als Steuerscheibe 46 mit einem Verschlussteil 48 ausgebildet. Das Verschlussteil 48 besitzt in Umfangsrichtung des Kreises 44 der Vakuumlöcher 34 eine Längenabmessung, die an den durch die Innenkontur 22 bestimmten Rohrmuffenabschnitt 50 des mit der erfindungsgemäßen Vorrichtung 10 herzustellenden doppelwandigen Verbundrohres entspricht. Das Verschlussteil 48 der Steuerscheibe 46 ergänzt mit seiner teilkreisförmigen Längenabmessung den Kreislängenabschnitt der Vakuumlöcher 34 zum vollen Kreis 44.

Die Antriebseinrichtung 38 für die das Steuerorgan 36 bildende Steuerscheibe 46 kann von einer Kolben-Zylindereinheit gebildet sein, die durch die Steuerscheibe 46 über eine Rastscheibe 52 schrittweise, jeweils dem axialen Abstand zwischen benachbarten Vakuumrillen 26 des Kalibrierdorns 24 entsprechend, angetrieben wird. Die beispielsweise von einem Pneumatikzylinder gebildete Kolben-Zylindereinheit der Antriebseinrichtung 38 ist zweckmäßigerweise mit einer Steuerimpulseinrichtung 54 verbunden, bei der es sich um eine speicherprogrammierbare Steuerung handeln kann.

Figur 1 verdeutlicht eine Betriebsstellung der Vorrichtung 10, bei der der Kalibrierdorn 24 Querrinnen 18 und Querrippen 20 der Formbackenhälften 12 sowie Querrinnen 18 und 20 der Formbackenhälften 14 zugeordnet ist, und die Stirnfläche 56 des Kalibrierdorns 24 an die den Rohrmuffenabschnitt 50 eines nicht dargestellten doppelwandigen Verbundrohres bestimmende Innenkontur 22 der Formbackenhälften 14 angrenzt.

Die Formbackenhälften 12 und 14 bewegen sich während der Herstellung von doppelwandigen Verbundrohren relativ zum Kalibrierdorn 24 in Richtung des Pfeiles 58. In dieser ersten Betriebsstellung sind alle Vakuumrillen 26 des Kalibrierdorns 24 über die Vakuum-Steuerventileinrichtung 30 strömungstechnisch mit der Vakuumquelle 32 verbunden, so dass das bereits in an sich bekannter Weise durch Extrusion hergestellte, nicht dargestellte doppelwandige Verbundrohr bzw. seine glatte Innenwand an die Außenmantelfläche 28 des Kalibrierdornes 24 gleitfähig angesaugt wird, um eine glatte Innenwand des doppelwandigen Verbundrohres zu realisieren. Die Außenwand des nicht dargestellten doppelwandigen Verbundrohres wird an die durch die Querrinnen 18 und Querrippen 20 der Formbackenhälften 12 gegebene gewellte Kontur der Formbackenhälften 12 eng angeschmiegt. Das kann bspw. in bekannter Weise durch eine Vakuumbeaufschlagung der Formbackenhälften 12 geschehen.

Figur 2 verdeutlicht in einer der Figur 1 ähnlichen schematischen Darstellung eine an die Betriebsstellung gemäß Figur 1 anschließende zweite Betriebsstellung der Formbackenhälften 12 und 14 relativ zum Kalibrierdorn 24 und die entsprechende Position des Steuerorgans 36 der Vakuum-Steuerventileinrichtung 30. In dieser Position verschließt das Verschlussteil 48 des als Steuerscheibe 46 ausgebildeten Steuerorgans 36 das Vakuumloch 34, das zu der zur Stirnfläche 56 des Kalibrierdorns 24 benachbarten Vakuumrille 26 zugeordnet ist, so dass diese zur Stirnfläche 46 benachbarte erste Vakuumrille 26 nicht länger mit der Vakuumquelle 32 (siehe Figur 1) verbunden, sondern die strömungstechnische Verbindung zwischen der Vakuumquelle 32 und dieser ersten Vakuumrille 26 unterbrochen ist. Die restlichen Vakuumlöcher 34 sind in dieser Position des Steuerorgans 36 der Vakuum-Steuerventileinrichtung 30 weiterhin mit den zu ihnen zugehörigen Vakuumrillen 26 verbunden, so dass diese mit Vakuum aus der Vakuumquelle 32 beaufschlagt werden.

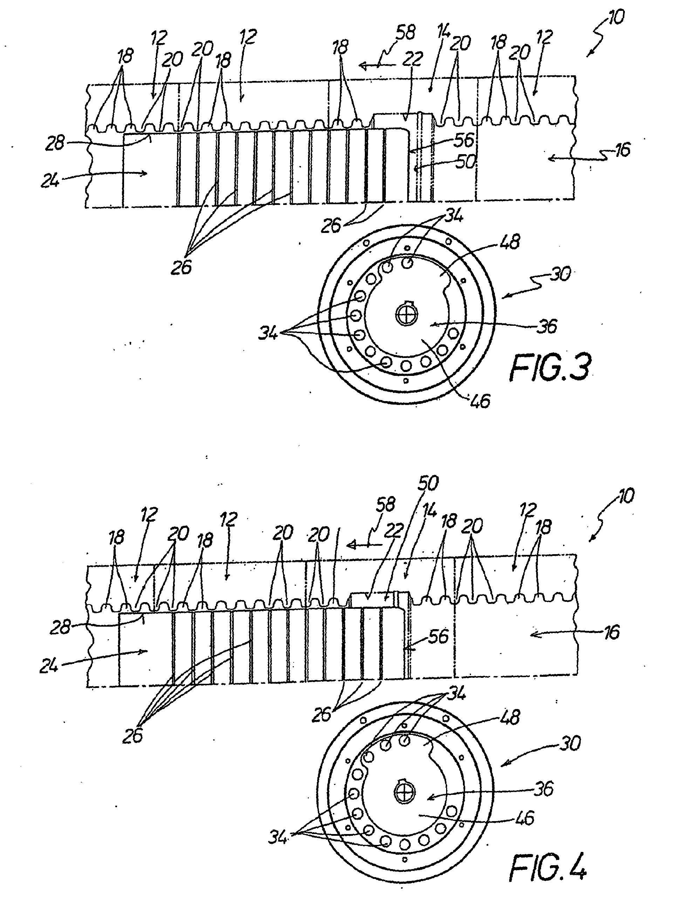

Figur 3 zeigt den an den Betriebszustand gemäß Figur 2 anschließenden dritten Betriebszustand, in welchem das Steuerorgan 36 der Vakuum-Steuerventileinrichtung 30 die beiden an die Stirnfläche 56 des Kalibrierdorns 24 anschließenden und voneinander axial beabstandeten Vakuumrillen 26 von der Vakuumquelle 32 (siehe Figur 1) trennt, weil das Steuerorgan 36 mit seinem Verschlussteil 48 die zu den besagten Vakuumrillen 26 zugehörigen Vakuumlöcher 34 abdichtend verschließt. Die übrigen Vakuumlöcher 34 sind offen, so dass die übrigen Vakuumrillen 26 mit der auch in Figur 3 nicht dargestellten Vakuumquelle strömungstechnisch verbunden sind.

Figur 4 verdeutlicht eine an den Betriebszustand gemäß Figur 3 anschließenden vierten Betriebszustand der Vorrichtung 10, wobei das Steuerorgan 36 mit seinem Verschlussteil 48 die ersten drei Vakuumlöcher 34 abdichtend verschließt, so dass die strömungstechnische Verbindung zwischen der auch in Figur 4 nicht gezeichneten Vakuumquelle und den an die Stirnfläche 56 des Kalibrierdorns 24 anschließenden drei Vakuumrillen 26 unterbrochen ist. Der Kalibrierdorn 24 steht dabei in den durch die Innenkontur 22 bestimmten Rohrmuffenabschnitt 50 so weit hinein, dass die von der Stirnfläche 56 ausgehende dritte Vakuumrille 26 der Querrippe 20 der jeweiligen Formbackenhälfte 14 zugeordnet ist, die in der durch den Pfeil 58 angedeuteten Vorschubrichtung der Formbackenhälften 12 und 14 stromabwärts an den Rohrmuffenabschnitt 50 angrenzt.

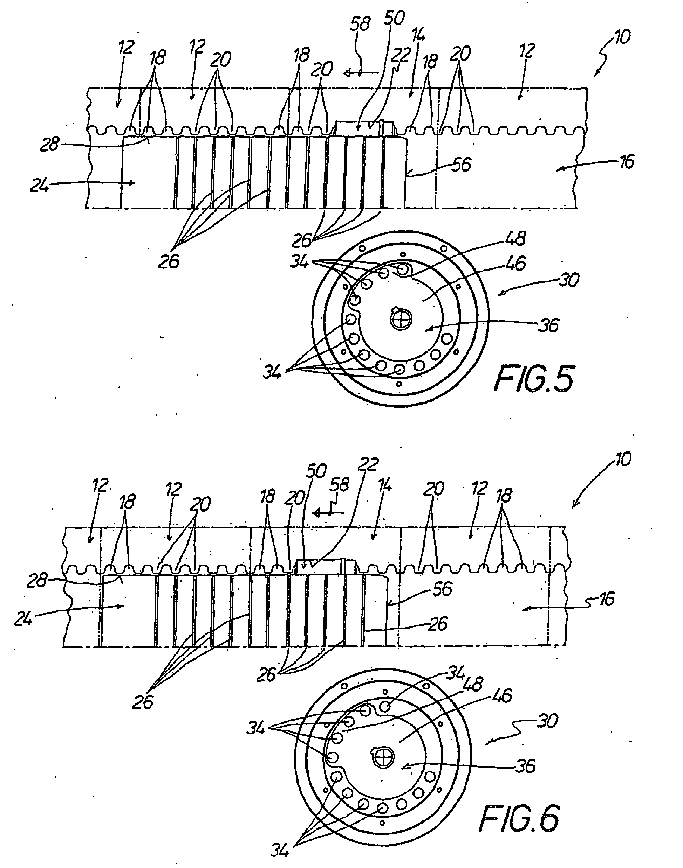

Figur 5 verdeutlicht einen an den Betriebszustand gemäß Figur 4 anschließenden fünften Betriebszustand der Vorrichtung 10, in welchem das Steuerorgan 36 mit seinem Verschlussteil 48 die ersten vier Vakuumlöcher 34 abdichtend verschließt, so dass die strömungstechnische Verbindung zwischen der Vakuumquelle 32 (siehe Figur 1) und den ersten vier Vakuumrillen 26, die an die Stirnfläche 56 des Kalibrierdorns 24 anschließen, unterbrochen ist. In diesem Betriebszustand ist die Stirnfläche 56 des Kalibrierdorns 24 bereits wieder in der durch den Pfeil 58 angedeuteten Vorschubrichtung der Formbackenhälften 12 und 14 stromaufwärts hinter dem Rohrmuffenabschnitt 50 angelangt, so dass ein Unterdruck in dem Rohrmuffenabschnitt 50 vermieden wird.

Figur 6 zeigt einen an den Betriebszustand gemäß Figur 5 anschließenden sechsten Betriebszustand, in welchem das Steuerorgan 36 der Vakuum-Steuerventileinrichtung 30 ebenfalls vier Vakuumlöcher 34 abdichtend verschließt, wobei das erste Vakuumloch 34 jedoch bereits wieder freigegeben ist, so dass das erste und das sechste und die folgenden Vakuumlöcher 34 mit der Vakuumquelle 32 (siehe Figur 1) strömungstechnisch verbunden sind. Das heißt jedoch, dass die zur Stirnfläche 56 benachbarte erste Vakuumrille 26 und die sechste und die folgenden Vakuumrillen 26 mit der auch in Figur 6 nicht dargestellten Vakuumquelle strömungstechnisch verbunden sind, und dass die strömungstechnische Verbindung der zweiten, der dritten, der vierten und der fünften Vakuumrille 26 mit der Vakuumquelle unterbrochen ist. Bei diesen zuletzt genannten Vakuumrillen 26 handelt es sich um die Vakuumrillen, die sich in diesem Betriebszustand im Bereich des Rohrmuffenabschnittes 50 der beiden sich diametral gegenüberliegenden Formbackenhälften 14 befinden, von welchen auch in Figur 6 nur die eine Formbackenhälfte 14 zeichnerisch dargestellt ist.

Die Formbackenhälften 12 und 14 bewegen sich kontinuierlich in der durch den Pfeil 58 verdeutlichten Vorschubrichtung bei ortsfest vorgesehenem Kalibrierdorn 24 in Bezug zu diesem weiter, wobei gleichzeitig die Vakuum-Steuerventileinrichtung 30, d.h. deren Steuerorgan 36, schrittweise angetrieben wird, um die entsprechenden Vakuumlöcher 34 abdichtend zu verschließen bzw. offen zu halten oder wieder zu öffnen.

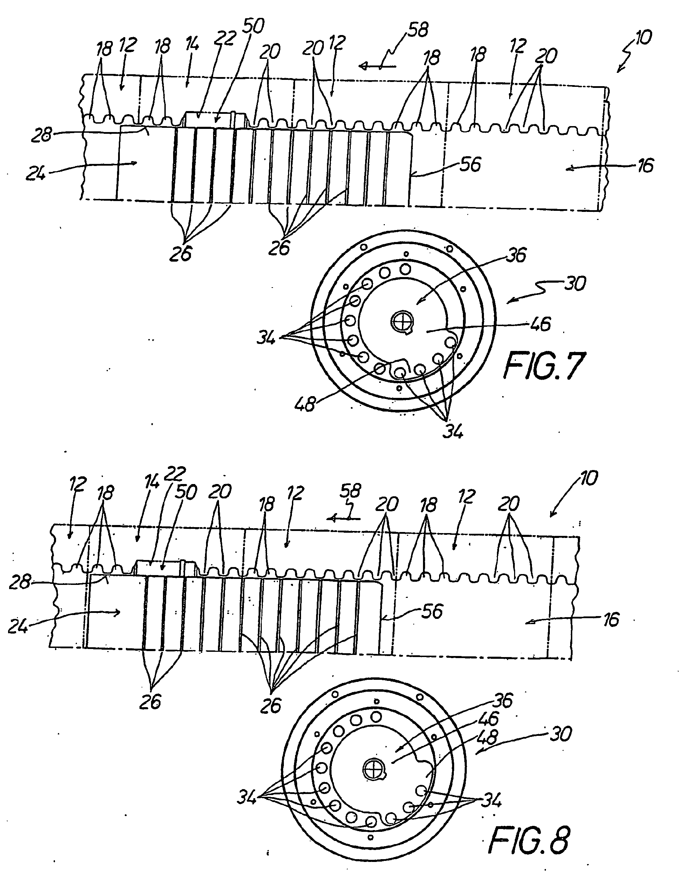

Figur 7 verdeutlicht einen Betriebszustand der Vorrichtung 10, in dem die von der Stirnfläche 56 des Kalibrierdorns 24 am weitesten entfernten, letzten vier Vakuumrillen 26 mit der Vakuumquelle 32 (siehe Figur 1) strömungstechnisch nicht verbunden sind, weil das als Steuerscheibe 46 ausgebildete Steuerorgan 36 mit seinem Verschlussteil 48 die letzten vier Vakuumlöcher 34 abdichtend verschließt. Die übrigen, vorderen Vakuumrillen 26 sind mit der Vakuumquelle strömungstechnisch über die entsprechenden Vakuumlöcher 34 verbunden.

Figur 8 verdeutlicht einen an den Betriebszustand gemäß Figur 7 anschließenden Betriebszustand, in welchem das Steuerorgan 36 der Vakuum-Steuerventileinrichtung 30 die letzten drei Vakuumlöcher 34 abdichtend verschließt, so dass die zugehörigen letzten drei Vakuumrillen 26 des Kalibrierdorns 24 gegen die Vakuumquelle abgedichtet sind. Die übrigen Vakuumrillen 26 vor diesen letzten drei abgedichteten Vakuumrillen 26 sind mit der Vakuumquelle 32 (siehe Figur 1) strömungstechnisch verbunden.

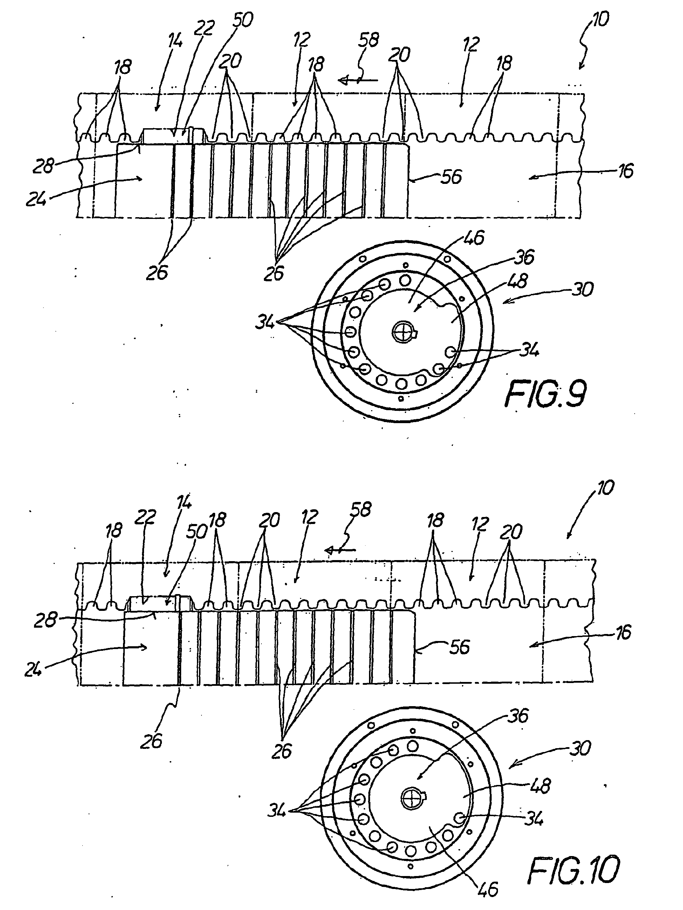

Figur 9 verdeutlicht den an den Betriebszustand gemäß Figur 8 anschließenden Betriebszustand, in dem die letzten beiden Vakuumrillen 26 des Kalibrierdorns 24 mittels der Vakuum-Steuerventileinrichtung 30 abgedichtet sind, und die Figur 10 verdeutlicht den an den Betriebszustand gemäß Figur 9 anschließenden Betriebszustand, in welchem nur noch die letzte Vakuumrille 26 des Kalibrierdorns 24 nicht mit der Vakuumquelle 32 (siehe Figur 1) strömungstechnisch verbunden ist.

Bei den Betriebszuständen gemäß den Figuren 8, 9 und 10 handelt es sich um Betriebszustände, in welchen sich die Formbackenhälften 12 und 14 in Bezug zum Kalibrierdorn 24 in Positionen befinden, in welchen der Rohrmuffenabschnitt 50 der sich gegenüberliegenden Formbackenhälften 14 sich an den jeweils abgesperrten Vakuumrillen 26 vorbeibewegt.

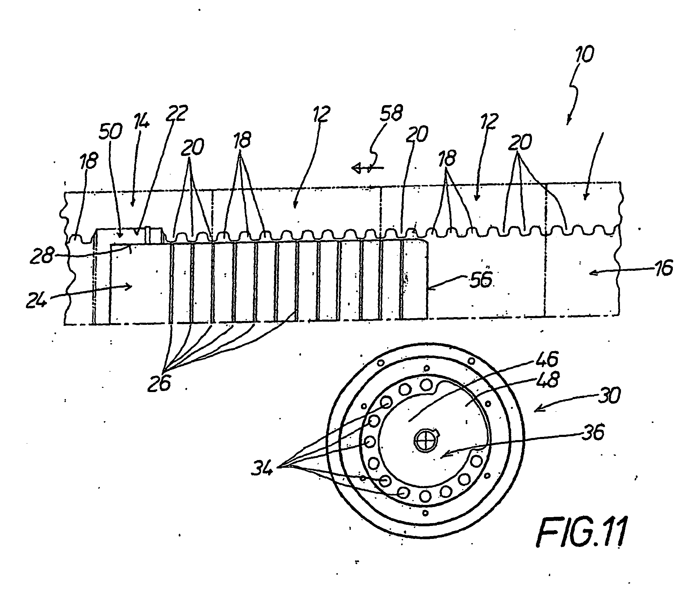

Die Figur 11 verdeutlicht dann den Betriebszustand der Vorrichtung 10, in welchem den Vakuumrillen 26 des Kalibrierdorns 24 wiederum nur Querrippen 20 und mit diesen abwechselnden Querrinnen 18 zugeordnet sind. Diese Betriebsposition gemäß Figur 11 entspricht also wieder der Betriebsposition gemäß Figur 1, wobei das Steuerorgan 36 der Vakuum-Steuerventileinrichtung 30 in der in Figur 11 gezeichneten Position verbleibt, so lange sich nur Formpackenhälften 12 mit Querrinnen 18 und Querrinnen 20 am Kalibrierdorn 24 vorbeibewegen. Erst wenn wieder Formbackenhälften 14, die mit einer einen Rohrmuffenabschnitt 50 bildenden Innenkontur 22 ausgebildet sind, eine in Figur 1 gezeichnete Betriebsposition erreichen, wird die Vakuum-Steuerventileinrichtung 30 wieder aktiviert, um mittels des Steuerorgans 36 dann wieder schrittweise die Vakuumlöcher 34 und mit deren Hilfe die jeweils zugehörigen Vakuumrillen 26 abdichtend zu verschließen, d.h. die strömungstechnische Verbindung zwischen der Vakuumquelle 32 und den entsprechend Vakuumrillen 26 zu unterbrechen.

## Patentansprüche

1. Vorrichtung zur Herstellung von doppelwandigen Verbundrohren, mit mindestens einem Rohrrippenlängsabschnit mit einer Wellenberge und: Wellentäler aufweisenden Außenwand und einer glatten Innenwand, die mit den Wellentälem der Außenwand integral verbunden sind, und mit mindestens einem Rohrmuffenabschnitt (50), entlang welchem die Außenwand und die Innenwand aneinander flächig anliegend integral verbunden sind, wobei die Vorrichtung (10) zwei Reihen von Formbackenhälften (12, 14) aufweist, die entlang einer gemeinsamen Formstrecke einen Formtunnel (16) zur Herstellung des Verbundrohres bilden, wobei mindestens ein Paar der sich in der Formstrecke gegenüberliegenden Formbackenhälften (14) eine den , Rohrmuffenabschnitt (50) ergebende Innenkontur (22) aufweisen, die restlichen Formbackenhalften (12) abwechselnd mit den Wellenbergen entsprechenden Querrinnen (18) und den Wellentälern entsprechenden Querrippen (20) ausgebildet sind, und in den Formtunnel (16) für die glatte Innenwand des Verbundrohres ein Kalibrierdorn (24) hineinsteht, an dessen Außenmantelfläche (28) gesteuert ein Unterdruck anlegbar ist,
**dadurch gekennzeichnet,**
**dass** der Kalibrierdom (24) mit axial voneinander beabstandeten jeweils schmalen Vakuumrillen (26) ausgebildet ist, die um seine Außenmantelfläche (28) in Umfangsrichtung in sich geschlossen umlaufen,
**dass** die Vakuumrillen (26) an der Außenmantelfläche (28) des Kalibrierdorns (24) axial voneinander gleichmäßig beabstandet sind,
und **dass** eine Vakuum-Steuerventileinrichtung (30) vorgesehen ist, die eine der Anzahl Vakuumrillen (26) des Kalibrierdorns (24) entsprechende Anzahl Vakuumlöcher (34) und ein mit einer Antriebseinrichtung (38) verbundenes Steuerorgan (36) aufweist, wobei jeder Vakuumrille (26) ein Vakuumloch (34) zugeordnet ist, und das Steuerorgan (36) vorgesehen ist zum definierten Verschließen der Vakuumlöcher (34), deren Vakuumrillen (26) sich jeweils in den Rohrmuffenabschnitt (50) hineinbewegen und sich in ihm befinden, und zum gleichzeitigen Öffnen der Vakuumlöcher (34), die den jeweils im Rohmppenlängsabschnitt befindlichen Vakuumrillen (26) zugeordnet sind.

2. Vorrichtung nach Anspruch 1,
**dadurch gekennzeichnet,**
**dass** die Vakuumlöcher (34) der Vakuum-Steuerventileinrichtung (30) entlang eines Umfangsabschnittes eines Kreises (44) voneinander gleichmäßig beabstandet angeordnet sind, und dass das Steuerorgan (36) der Vakuum-Steuerventileinrichtung (30) als Steuerscheibe (46) mit einem Verschlussteil (48) ausgebildet ist, das in Umtangsrichtung des Kreises (44) eine an den Rohrmuffenabschnitt (50) angepasste Längenabmessung besitzt und den Kreisumfangsabschnitt der Vakuumlöcher (34) zum vollen Kreis (44) ergänzt.

3. Vorrichtung nach Anspruch 2,
**dadurch gekennzeichnet,**
**dass** die Steuerscheibe (46) der Vakuum-Steuerventileinrichtung (30) mittels einer die Antriebseinrichtung (38) bildenden Kolben-Zylindereinheit über eine Rastscheibe (52) schrittweise, jeweils dem axialen Abstand zwischen benachbarten Vakuumrillen (26) des Kalibrierdorns (24) entsprechend, angetrieben wird.

4. Vorrichtung nach Anspruch 3,
**dadurch gekennzeichnet,**
**dass** die Kolben-Zylindereinheit von einem Pneumatikzylinder gebildet ist.

5. Vorrichtung nach Anspruch 3,
**dadurch gekennzeichnet,**
**dass** die Kolben-Zylindereinheit mit einer Steuerimpulseinrichtung (54) verbunden ist.

6. Vorrichtung nach Anspruch 5,
**dadurch gekennzeichnet,**
**dass** die Steuerimpulseinrichtung (54) eine speicherprogrammierbare Steuerung ist.

## Claims

1. Apparatus for producing double-walled composite tubes, having at least one finned tube longitudinal portion with an outer wall which has wave valleys and wave peaks, and a smooth inner wall, which is integrally joined to the wave valleys of the outer wall, and having at least one tube socket portion (50), along which the outer wall and the inner wall are integrally joined to one another with surface-to-surface contact, the apparatus (10) having two rows of shaping-jaw halves (12, 14), which along a common shaping section form a shaping tunnel (16) for production of the composite tube, at least one pair of the shaping-jaw halves (14) lying opposite one another in the shaping section having an inner contour (22) which produces the tube socket portion (50), while the remaining shaping-jaw halves (12) are alternately designed with transverse grooves (18) corresponding to the wave peaks and transverse fins (20) corresponding to the wave valleys, and a sizing mandrel (24), to whose outer lateral surface (28) a controlled subatmospheric pressure can be applied, projecting into the shaping tunnel (16) for the smooth inner wall of the composite tube, **characterized in that** the sizing mandrel (24) is designed with in each case narrow vacuum grooves (26) which are spaced apart from one another in the axial direction and run, continuously in the circumferential direction, around its outer lateral surface (28), **in that** the vacuum grooves (26) are uniformly spaced apart from one another in the axial direction on the outer lateral surface (28) of the sizing mandrel (24), and **in that** there is a vacuum control valve device (30), which has a number of vacuum holes (34) corresponding to the number of vacuum grooves (26) of the sizing mandrel (24), and a control member (36) which is connected to a drive device (38), each vacuum groove (26) being assigned a vacuum hole (34), and the control member (36) being intended to effect defined closure of the vacuum holes (34), whose vacuum grooves (26) in each case move into the tube socket portion (50) and are located therein, and at the same time to open the vacuum holes (34) which are assigned to the vacuum grooves (26) which are in each case located in the finned tube longitudinal portion.

2. Apparatus according to Claim 1, **characterized in that** the vacuum holes (34) of the vacuum control valve device (30) are arranged uniformly spaced apart from one another along a portion of the circumference of a circle (44), and **in that** the control member (36) of the vacuum control valve device (30) is designed as a control disc (46) with a closure part (48) which, as seen in the circumferential direction of the circle (44), has a length dimension which is matched to the tube socket portion (50) and complements the portion of the circumference of the circle formed by the vacuum holes (34) to form a complete circle (44).

3. Apparatus according to Claim 2, **characterized in that** the control disc (46) of the vacuum control valve device (30) is driven in steps, in each case corresponding to the axial spacing between adjacent vacuum grooves (26) of the sizing mandrel (24), by means of a piston cylinder unit, forming the drive device (38), and via a latching disc (52).

4. Apparatus according to Claim 3, **characterized in that** the piston-cylinder unit is formed by a pneumatic cylinder.

5. Apparatus according to Claim 3, **characterized in that** the piston-cylinder unit is connected to a control pulse device (54).

6. Apparatus according to Claim 5, **characterized in that** the control pulse device (54) is a programmable-memory control unit.

## Revendications

1. Dispositif pour fabriquer des tubes d'assemblage à double paroi, avec au moins une paroi extérieure présentant une section longitudinale de nervure de tube avec un sommet et un creux et une paroi intérieure lisse qui sont intégralement reliées aux creux de la paroi extérieure, et avec au moins une section de manchon de raccord (50), le long de laquelle la paroi extérieure et la paroi intérieure sont intégralement reliées reposant à plat l'une sur l'autre, le dispositif (10) présentant deux rangées de moitiés de mâchoire de moulage (12, 14) qui forment le long d'un parcours de moulage commun un tunnel de moulage (16) pour la fabrication du tube d'assemblage, au moins une paire des moitiés de mâchoire de moulage (14) se faisant face dans le parcours de moulage présentant un contour intérieur (22) produisant la section de manchon de raccord (50), les moitiés de mâchoire de moulage (12) restantes étant réalisées en alternance avec les rigoles transversales (18) correspondant aux sommets et les nervures transversales (20) correspondant aux creux, et un goujon de calibrage (24) pénétrant dans le tunnel de moulage (16) pour la paroi intérieure lisse du tube d'assemblage, sur la surface enveloppe externe (28) duquel peut être appliquée de manière commandée une dépression,
**caractérisé en ce**
**que** le goujon de calibrage (24) est réalisé avec des rainures à vide (26) respectivement étroites, à distance axiale les unes des autres, qui font le tour fermées en soi de sa surface enveloppe externe (28) dans le sens périphérique,
en ce que les rainures à vide (26) sont régulièrement espacées axialement les unes des autres sur la surface enveloppe externe (28) du goujon de calibrage (24),
et en ce qu'un dispositif de soupape de commande à vide (30) est prévu, lequel présente un nombre de trous à vide (34) correspondant au nombre de nervures à vide (26) du goujon de calibrage (24) et un organe de commande (36) relié à un dispositif d'entraînement (38), à chaque rainure à vide (26) étant associé un trou à vide (34), et l'organe de commande (36) étant prévu pour fermer de manière définie les trous à vide (34), dont les nervures à vide (26) se déplacent respectivement à l'intérieur de la section de manchon de raccord (50) et se trouvent dans celle-ci, et pour ouvrir simultanément les trous à vide (34) qui sont associés aux nervures à vide (26) se trouvant respectivement dans la section longitudinale de nervure de tube.

2. Dispositif selon la revendication 1,
**caractérisé en ce**
**que** les trous à vide (34) du dispositif de soupape de commande à vide (30) sont disposés à distance régulière les uns des autres le long d'une section périphérique d'un cercle (44), et en ce que l'organe de commande (36) du dispositif de soupape de commande (30) est réalisé comme une came de commande (46) avec un élément d'obturation (48), qui possède dans le sens périphérique du cercle (44) une dimension longitudinale adaptée à la section de manchon de raccord (50) et complète la section périphérique de cercle des trous à vide (34) pour former un cercle complet (44).

3. Dispositif selon la revendication 2,
**caractérisé en ce**
**que** la came de commande (46) du dispositif de soupape de commande à vide (30) est entraînée progressivement au moyen d'une unité cylindre et piston formant le dispositif d'entraînement (38) par un disque d'arrêt (52), correspondant respectivement à la distance axiale entre des nervures à vide (26) contiguës du goujon de calibrage (24).

4. Dispositif selon la revendication 3,
**caractérisé en ce**
**que** l'unité cylindre et piston est constituée d'un vérin pneumatique.

5. Dispositif selon la revendication 3,
**caractérisé en ce**
**que** l'unité cylindre et piston est reliée à un dispositif d'impulsions de commande (54).

6. Dispositif selon la revendication 5,
**caractérisé en ce**
**que** le dispositif d'impulsions de commande (54) est une commande à mémoire programmable.
